# EUROPÄISCHE PATENTSCHRIFT

(11) **EP 0 839 739 B1**
(45) Veröffentlichungstag und Bekanntmachung des Hinweises auf die Patenterteilung: **06.02.2002**
(21) Anmeldenummer: 97119212.5
(22) Anmeldetag: 04.11.1997
(51) Int. Cl.: B65G 47/38

(54) **Kipp-Förderelement für einen Sortierförderer**
Tiltable conveyor element for a sorting conveyor
Elément de convoyeur basculant pour un convoyeur de triage

(30) Priorität: 05.11.1996 DE 19645587
(43) Veröffentlichungstag der Anmeldung: 06.05.1998
(73) Patentinhaber: Beumer Maschinenfabrik GmbH & Co. KG, 59269 Beckum (DE)
(72) Erfinder: Pölling, Ludger, 59329 Wadersloh-Diestedde (DE)
(74) Vertreter: Hoormann, Walter, Dr.-Ing.

(56) Entgegenhaltungen:
- EP-A- 0 664 262
- EP-B- 0 456 297
- DE-C- 584 760
- DE-U- 6 753 684
- FR-A- 2 528 403
- GB-A- 1 208 893
- US-A- 2 199 554
- US-A- 2 647 472
- US-A- 4 759 439

## Beschreibung

Die Erfindung betrifft ein Kipp-Förderelement für einen Sortierförderer (Sorter) zum Sortieren von Stückgutteilen, insbesondere Gepäckstücken, nach dem Oberbegriff des Ansprüches 1, wie es aus der GB-A-1 208 893 bekannt 57.

Derartige Kipp-Förderelemente weisen jeweils einen (an ihrem oberen Ende angeordneten) im wesentlichen ebenen Tragboden zum Aufnehmen und Abstützen eines Stückgutteils auf, der zwecks seitlicher Abgabe des von ihm abgestützten Stückgutteils an der jeweils vorgegebenen Abgabestelle aus einer im wesentlichen horizontalen Grundstellung um eine im wesentliche in seiner Längsrichtung (= Förderrichtung) verlaufende Kippachse in eine schräge Abgabestellung zu kippen (und nach Abgabe des betreffenden Stückgutteils in seine Grundstellung zurückzubewegen) ist, und an dessen im wesentlichen in Förderrichtung verlaufenden Längsrändern jeweils eine Seitenwange angeordnet ist, die in der Grundstellung des Tragbodens einen seitlichen Anschlag für das von dem Tragboden abgestützte Stückgutteil bildet.

Beim Sortieren von Stückgutteilen mittels eines Sorters kann es zu Problemen kommen, wenn die zu sortierenden Stückgutteile während des Transports seitlich bis über den Tragboden eines Förderelements vorstehen. Hierzu kommt es beispielsweise dann, wenn es sich bei den zu sortierenden Stückgutteilen um Gepäckstücke wie z.B. Rucksäcke handelt, an denen lose Riemen, Gurte o.dgl. vorhanden sind, bzw. um Gepäckstücke, aus denen irgendwelche Teile heraushängen, die sich bei dem Sortiervorgang mit irgendwelchen Teilen der Anlage verhaken können.

Um diese Schwierigkeiten zu vermeiden, sind Sorter bereits als sogenannte Behälterförderer ausgebildet worden, bei denen die zu sortierenden Stückgutteile vor ihrer Aufgabe auf den Sorter jeweils in einen Behälter eingegeben werden, der dann zusammen mit dem betreffenden Gepäckstück o.dgl. ein zu sortierendes Stückgutteil bildet (s. z.B. EP 0 456 297 B1). Hierdurch entsteht allerdings ein erheblicher zusätzlicher Aufwand, zumal die leeren Behälter entweder von den Zielstellen (Abgabestellen) oder einer anderen Stelle des Sorters dorthin zurückgeführt werden müssen, wo sie mit den Stückgutteilen zu beschicken sind.

Zu einem unerwünschten seitlichen Überstand von zu sortierenden Stückgutteilen über den Tragboden kann es auch in Horizontalkurven der Sorterbahn kommen, wenn ein Stückgutteil dabei durch entsprechende Beschleunigung relativ zum Tragboden verrutscht, wobei dieses ggfs. so erheblich sein kann, daß bestimmte Stückgutteile dabei sogar von dem Sorter herunterfallen.

Um auch diese nachteiligen Wirkungen mit Sicherheit zu vermeiden, hat man daher auch bereits den von den erwähnten Behälterförderern her bekannten Gedanken aufgegriffen, nämlich an den Längsrändern der Tragböden beim Transport eines Stückgutteils jeweils eine seitliche Begrenzung zu schaffen, und hat an den Längsrändern des Tragbodens jeweils eine feste Seitenwange angeordnet, die ein Verrutschen eines auf dem Tragboden angeordneten Stückgutteils entsprechend begrenzt. Diese festen Seitenwangen bilden jedoch bei gattungsgemäßen Kipp-Förderelementen, die jeweils durch ein seitliches Kippen des Tragbodens entleert werden, ein Hindernis und können daher nur relativ geringfügig bis über die Oberseite des Tragbodens nach oben vorstehen. Hierdurch wird die angestrebte Anschlagwirkung in der Grundstellung des Tragbodens sehr begrenzt. Insbesondere ist die Wirkung dieser Seitenwangen als seitliche Begrenzung für das jeweilige Stückgutteil außerordentlich begrenzt, so daß selbst dann, wenn hierdurch ein seitliches Verrutschen während des Transports so zu begrenzen ist, daß das Stückgutteil nicht vom Tragboden herunterrutscht, dennoch häufig ein seitlicher Überstand von Stückgutabschnitten nicht zu verhindern ist.

Aus der GB-A-1 208 893 ist ein Kipp-Förderelement für einen Sorter bekannt, welches in der Grundstellung (Förderstellung) einen seitlich geneigten Tragboden aufweist, der an einem seitlichen Längsrand eine in der gekippten Förderstellung über die Tragebene des Tragbodens hochstehende Seitenwange aufweist, die mittels einer Stützverbindung an der gewählten Abgabestelle in eine zur Tragebene stütztende Stellung zu bringen ist.

Aus der US-A-2 647 472 ist bereits seit über einem halben Jahrhundert eine steuerbare Schwenktür für einen sg. Kastenkipper bekannt, also ein Rollmaterial zum Transportieren vom Schüttgut.

Der vorliegenden Erfindung liegt die Aufgabe zugrunde, Kipp-Förderelement der eingangs beschriebenen Gattung zu schaffen, dessen Seitenwange(n) die planmäßige Abgabe eines Stückgutteils an einer Abgabestelle nicht behindert, wobei die Anschlag- und Begrenzungswirkung der Seitenwange(n) bei relativ einfacher, robuster Ausbildung in der Grundstellung des Tragbodens (durch mehr oder weniger beliebig große Verlängerung der Seitenwangen über die Oberseite des Tragbodens) beidseitig erheblich verbessert ist, und an der jeweiligen Abgabestelle beim Kippen des Förderelementes selbsttätig eine flüchtende Ausrichtung der betreffenden Seitenwange zur Tragfläche des Tragbodens erfolgt.

Die Lösung dieser Aufgabe erfolgt erfindungsgemäß durch die kennzeichnenden Merkmale des Anspruchs 1, während bervorzugte Ausgestaltungen der Erfindung in den Unteransprüchen beschrieben sind.

Ein Grundgedanke eines solchen Kupp-Förderelementes besteht mithin darin, zwar an den Längsrändern des Tragbodens Seitenwangen vorzusehen, die in der Grundstellung des Tragbodens seitliche Anschläge für das jeweils auf dem Tragboden abgestützte Stückgutteil bilden, zumindest aber diejenige Seitenwange, über deren ihr zugeordneten Längsrand des Tragbodens das Stückgutteil beim Kippen des Tragbodens seitlich abgegeben werden soll, beweglich am Kipp-Förderelement anzuordnen, um diese Seitenwange bei Bedarf in eine zweite Stellung bewegen zu können, in welcher der betreffende Längsrand des Tragbodens anschlagfrei ist. Handelt es sich um ein Kipp-Förderelement, welches aus seiner Grundstellung wahlweise zur einen oder anderen Seite hin (in Förderrichtung gesehen also entweder nach rechts oder links) in eine schräge Abgabestellung zu kippen ist, so werden selbstverständlich beide Seitenwangen entsprechend relativ zum Tragboden beweglich ausgebildet.

Um eine erfindungsgemäß ausgebildete bzw. angeordnete Seitenwange in der nicht gekippten Grundstellung des Tragbodens in ihrer Anschlagstellung zu halten, und sie aus dieser Anschlagstellung zu einem gewünschten Zeitpunkt in ihre zweite Stellung zu bewegen (und zu einem späteren Zeitpunkt in die Anschlagstellung zurückzubewegen), stehen ersichtlich unterschiedlichste Ausgestaltungsmöglichkeiten zur Verfügung. So kann eine erfindungsgemäß ausgebildete bzw. angeordnete Seitenwange beispielsweise mittels eines von außen her steuerbaren Antriebs (beispielsweise einem kleinen Elektromotor oder einer Kolben-Zylinder-Einheit) z.B. mit der Unterseite des Tragbodens verbunden sein, welcher die Seitenwange nach Erhalt eines entsprechenden Steuersignals aus ihrer Anschlagstellung in ihre zweite Stellung bewegt, und sie nach Erhalt eines weiteren Steuersignals in ihre Anschlagstellung zurückbewegt, wobei diese Steuersignale ggfs. durch die Kippbewegung(en) des Tragbodens ausgelöst oder aber auch unabhängig hiervon erzeugt werden können, und wobei die Relativbewegung der Seitenwange zum Tragboden durch translatorisches Verschieben der Seitenwange oder eine Schwenkbewegung relativ zum Tragboden erfolgen kann.

Schon wegen des hiermit verbundenen Aufwands ist jedoch bevorzugt vorgesehen, daß eine bewegliche Seitenwange so am Kipp-Förderelement angeordnet ist, daß sie beim Kippen des Tragbodens aus dessen Grundstellung in dessen Abgabestellung (Kipp-Endstellung) selbsttätig, das heißt also insbesondere ohne entsprechenden gesonderten Antrieb und ohne Eingriff von außen, in ihre zweite Stellung zu bewegen ist, und zwar mittels eines einerseits mit der Seitenwange und andererseits mit einem geeigneten Teil des Kipp-Förderelements verbundenen Verbindungsmittels, welches bewirkt, daß die Seitenwange beim Kippen des Tragbodens selbsttätig in ihre zweite Stellung bewegt und beim Zurückkippen des Tragbodens in dessen Grundstellung wieder in ihre Anschlagstellung bewegt wird.

Hierfür ist bevorzugt vorgesehen, daß eine relativ zum Tragboden bewegliche Seitenwange um eine im bzw. parallel zum betreffenden Längsrand des Tragbodens verlaufende, durch wenigstens ein Scharniergelenk o.dgl. gebildete Schwenkachse (nach außen) schwenkbar am Tragboden angelenkt ist. Dabei ist die Seitenwange bevorzugt mit Abstand zu ihrer Schwenkachse an wenigstens einen quer zu ihrer Schwenkachse verlaufenden Lenker angelenkt, der an seinem anderen Ende mit Abstand zur Kippachse am Kipp-Förderelement angelenkt ist, wobei dieser Lenker mithin als Betätigungselement für die Seitenwange dient, mit dem diese beim Kippen des Tragbodens selbsttätig zwischen ihrer Anschlagstellung und ihrer zweiten Stellung zu bewegen ist.

Der Lenker ist bevorzugt an seiner der Seitenwange zugeordneten ersten Gelenkstelle an einem äußeren Ansatz der Seitenwange angelenkt, der sich bevorzugt bis unter die Unterseite des Tragbodens erstreckt, wobei der Lenker dabei am unteren Abschnitt des Ansatzes (also bereits in der Grundstellung des Tragbodens unterhalb der Schwenkachse) angelenkt ist. Zwar könnte sich die der Seitenwange zugeordnete erste Gelenkstelle des Lenkers grundsätzlich auch in der Grundstellung des Tragbodens oberhalb der Schwenkachse befinden, doch ist eine solche Anordnung insbesondere dann unzweckmäßig, wenn der Tragboden des Kipp-Förderelements wahlweise zu dessen beiden Seiten gekippt werden kann, so daß die beiden jeweils einem Längsrand des Tragbodens zugeordneten Seitenwangen mit einer entsprechenden Lenkeranordnung zu versehen sind, und dafür Sorge zu tragen ist, daß der bei einem seitlichen Kippen des Tragbodens hochgeschwenkte Lenker weder mit dem Tragboden kollidiert, noch auch der ihm zugeordneten Seitenwange einen Schwenkweg im Sinne der Kipprichtung einprägt. Da es nicht nur sinnvoll und demgemäß geboten ist, in derartigen Fällen die Lenker jeweils gleich auszubilden, sondern überdies aus Kostengründen geboten ist, die Lenker auch dann in identischer Weise auszubilden, wenn der Tragboden bei im übrigen gleicher Ausbildung des Kipp-Förderelements nur zu einer Seite hin kippbar ist, wählt man zweckmäßigerweise auch bei nur einseitig kippbaren Tragböden die gleiche Lenkeranordnung wie bei beidseitig kippbaren Ausführungen.

Weiterhin hat es sich als zweckmäßig erwiesen, den einer beweglichen Seitenwange zugeordneten Lenker an seiner der Seitenwange abgekehrten zweiten Gelenkstelle an einem Abschnitt des Kipp-Förderelements anzulenken, der beim seitlichen Kippen des Tragbodens nicht mitgekippt wird, und zwar vorzugsweise an der der betreffenden Seitenwange zugekehrten Seite des Kipp-Förderelements, da bei einer solchen Ausbildung der Lenker die dem Tragboden des Kipp-Förderelements relativ zur Sorterführung abstützende Tragkonstruktion nicht zu "kreuzen" braucht, und der Lenker an einer beliebigen Stelle der Seitenwange angeordnet werden kann, während er anderenfalls an seiner der Seitenwange zugekehrten ersten Gelenkstelle ggfs. an einem endseitigen Ansatz der Seitenwange angelenkt werden muß, der sich zwischen dem Kipp-Förderelement und einem diesem benachbarten Kipp-Förderelement von dem betreffenden Längsrand des Tragbodens nach innen erstreckt, also im Bereich eines Querrands des Tragbodens angeordnet ist, so daß sich der betreffende Lenker mithin zwischen zwei einander benachbarten Kipp-Förderelementen erstreckt, und dafür Sorge getragen werden muß, daß der Lenker in den horizontal gekrümmten Abschnitten der Sorter-Förderbahn nicht mit den ihm benachbarten Kipp-Förderelementen kollidiert.

Gemäß einer bevorzugten Ausgestaltung der vorliegenden Erfindung ist der Lenker einer beweglichen Seitenwange so ausgebildet bzw. angeordnet, daß seine dieser Seitenwange zugeordnete erste Gelenkstelle - unter entsprechendem Schwenken der Seitenwange - beim Kippen des Tragbodens aus dessen Grundstellung in Richtung auf die betreffende Seitenwange relativ zum Tragboden um dessen Schwenkachse im gleichen Drehsinne wie die Kippbewegung des Tragbodens so verschwenkt wird, daß die dem Tragboden zugekehrte Innenseite der Seitenwange spätestens in der Kipp-Endstellung des Tragbodens zu dem der Seitenwange benachbarten Abschnitt der Oberseite des Tragbodens fluchtet (bzw. ggfs. - nach unten versetzt - parallel hierzu verläuft), die Seitenwange also aus ihrer Anschlagstellung in eine solche Relativstellung zum Tragboden bewegt wird, in welcher sie (= ihre Innenseite) die Gleitfläche des Tragbodens (zu dieser fluchtend) verlängert, ohne das entsprechende Stückgutteil beim seitlichen Abrutschen vom Tragboden zu behindern.

Weitere bevorzugte Ausgestaltungen der vorliegenden Erfindung sind in den Unteransprüchen beschrieben.

Dabei sei noch einmal ausdrücklich erwähnt, daß es für die vorliegende Erfindung völlig unerheblich ist, auf welche Weise bzw. mit welchen Mitteln der Tragboden an einer Abgabestelle aus seiner Grundstellung in seine schräge Abgabestellung zu bewegen ist, und daß es allein darauf ankommt, daß der Tragboden des Sorter-Förderelements aus seiner im wesentlichen horizontalen Grundstellung in eine schräg hierzu verlaufende seitliche Abgabestellung zu kippen ist. Außerdem sei darauf verwiesen, daß der im wesentlichen ebene Tragboden ggfs. auch gewölbt (gekrümmt) bzw. entsprechend abgekantet ausgebildet sein kann, um ein aufgenommenes Stückgutteil möglichst mittig zu zentrieren, dabei aber einem aufgenommenen Stückgutteil insgesamt eine im wesentlichen ebene Stützfläche bietet, auf welcher dieses während der Förderung abzustützen ist, und zwar schon deshalb, weil eine starke Krümmung bzw. Abwinklung des Tragbodens insbesondere bei einer Handhabung von Gepäckstücken zu einer zu großen Bauhöhe der Kipp-Förderelemente führen würde. Eine solche Ausbildung der Tragböden mag für Stückgutteile wie Rundhölzer o.dgl. zweckmäßig sein, um deren seitliches Abrollen von dem (den) sie abstützenden Tragboden (Tragböden) zu verhindern, wie dieses beispielsweise in der DE-PS 1 226 041 vorgesehen ist, wobei der "Tragboden" eines Kipp-Förderelements dort von zwei Armpaaren gebildet ist, die jeweils einen Winkel von etwa 135° einschließen, und wobei der eine Arm jedes Armpaares, der über die Kippachse hinaus nach unten verlängert ist, an einer Abgabestelle so verschwenkt wird, daß seine Oberseite in der Kipp-Endstellung im wesentlichen zu der Oberseite des anderen Arms fluchtet. Hierbei handelt es sich jedoch ersichtlich um eine Ausgestaltung eines Sorters, die auf ein spezielles (nämlich hälftiges) Kippen eines bereits in der Grundstellung nicht im wesentlichen horizontalen "Tragbodens" abstellt, der aufgrund seiner bereits in seiner Grundstellung vorliegenden Konfiguration an seinen Längsrändern keiner Seitenwangen bedarf, da bereits die als Arme ausgebildeten, den Tragboden bildenden Teile des Kipp-Förderelements einen seitlichen Anschlag für ein von einem Kipp-Förderelement transportierten Stückgutteil bilden, so daß es zur Vermeidung eines seitlichen Verrutschens eines von einem Tragboden aufgenommenen Stückgutteils während dessen Förderung keines zusätzlichen Anschlages bedarf, wie er bei einem gattungsgemäßen Kipp-Förderelement an den Längsrändern des Tragbodens vorgesehen ist. Demgemäß sieht die DE-PS 1 226 041 auch keine an den seitlichen Längsrändern des "Tragbodens" vorgesehenen Seitenwangen vor, so daß diese Druckschrift dem zuständigen Fachmann auch keine Lehre vermittelt, wie ggfs. mit derartigen Seitenwangen zu verfahren ist.

Bevorzugte Ausgestaltungen der vorliegenden Erfindung sind in den Unteransprüchen beschrieben.

Die Erfindung ist nachstehend an einem Ausführungsbeispiel unter Bezugnahme auf eine Zeichnung weiter erläutert. Es zeigt:
- Fig. 1: eine seitliche Draufsicht auf ein erfindungsgemäßes Kipp-Förderelement in seiner nicht gekippten Grundstellung in Richtung des Pfeils I (s. Fig. 5) in Förderrichtung gesehen;
- Fig. 2: das Förderelement gemäß Fig. 1 in seiner (in Förderrichtung gesehen) nach rechts gekippten Abgabestellung;
- Fig. 3: das Kipp-Förderelement gemäß den Figuren 1 und 2 in seiner mit ausgezogenen Linien dargestellen Grundstellung (s. Fig. 1) sowie in seiner Kipp-Endstellung gemäß Fig. 2 und zwei jeweils mit gestrichelten Linien dargestellten Zwischenstellungen;
- Fig. 4: das Kipp-Förderelement gemäß den Figuren 1-3 in einer (in Förderrichtung gesehen) nach links gekippten Kipp-Endstellung;
- Fig. 5: eine seitliche Draufsicht auf einen Abschnitt des Sorter-Förderstrangs in Richtung des Pfeils V in Fig. 1 gesehen;
- Fig. 6: eine Draufsicht auf die Darstellung gemäß Fig. 5 in Richtung des Pfeils VI in Fig. 5 gesehen; und
- Fig. 7: eine Darstellung der geometrischen Verhältnisse auf der rechten Seite der Mittelachse, welche zeigt, wie der Ort der zweiten Gelenkstelle einer Seitenwange aufzufinden ist.

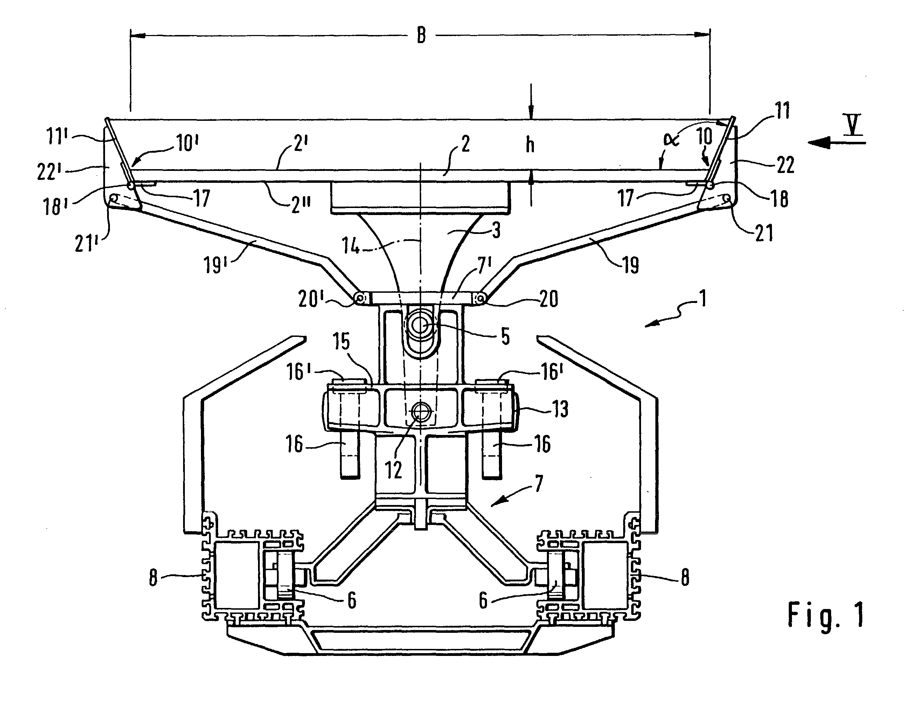

Fig. 1 zeigt ein im ganzen mit 1 bezeichnetes Kipp-Förderelement 1 für einen Sortierförderer (Sorter) zum Sortieren von Stückgutteilen, wie er vorstehend im einzelnen beschrieben ist.

Das Kipp-Förderelement 1 weist einen ebenen Tragboden 2 zum Aufnehmen und Abstützen eines nicht dargestellten Stückgutteils auf, der ggfs. auch leicht (nach unten) gekrümmt bzw. abgewinkelt ausgebildet sein könnte, und zwar in seiner horizontalen Grundstellung, welche der Tragboden 2 während seiner Förderung außerhalb der Abgabestelle einnimmt, an welcher das von ihm aufgenommene Stückgutteil seitlich abzugeben ist.

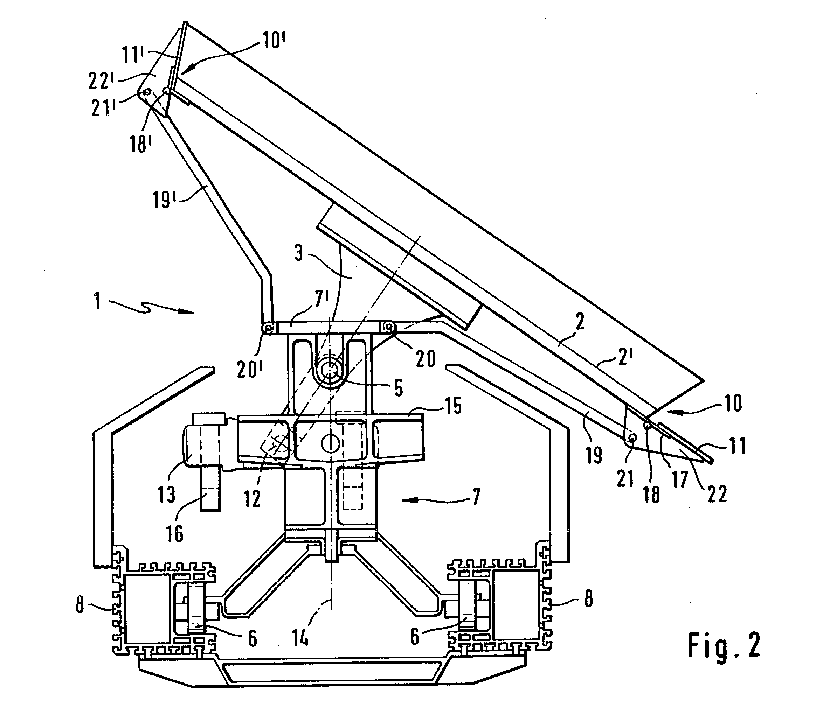

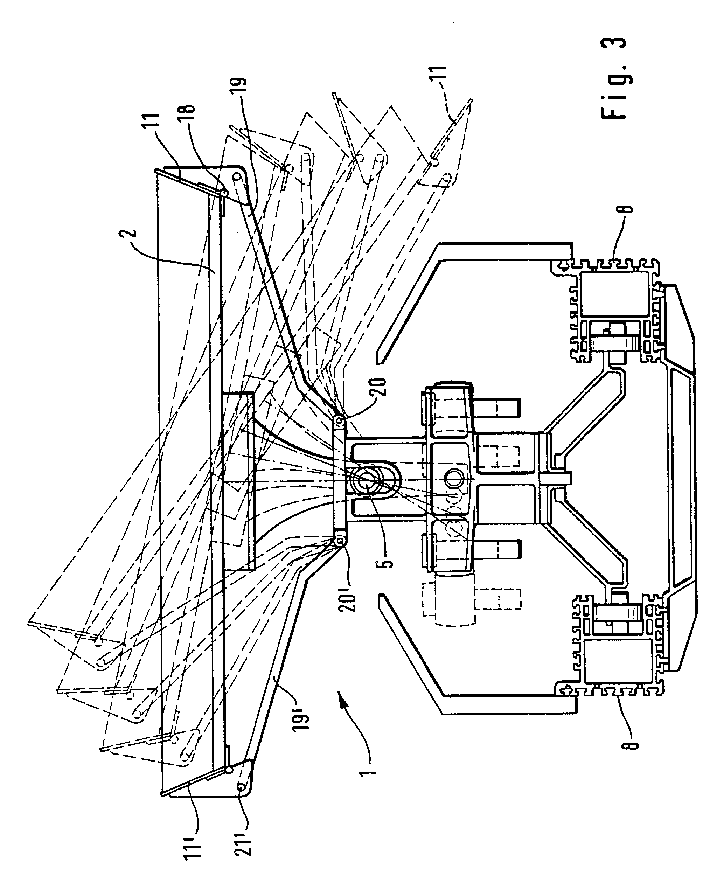

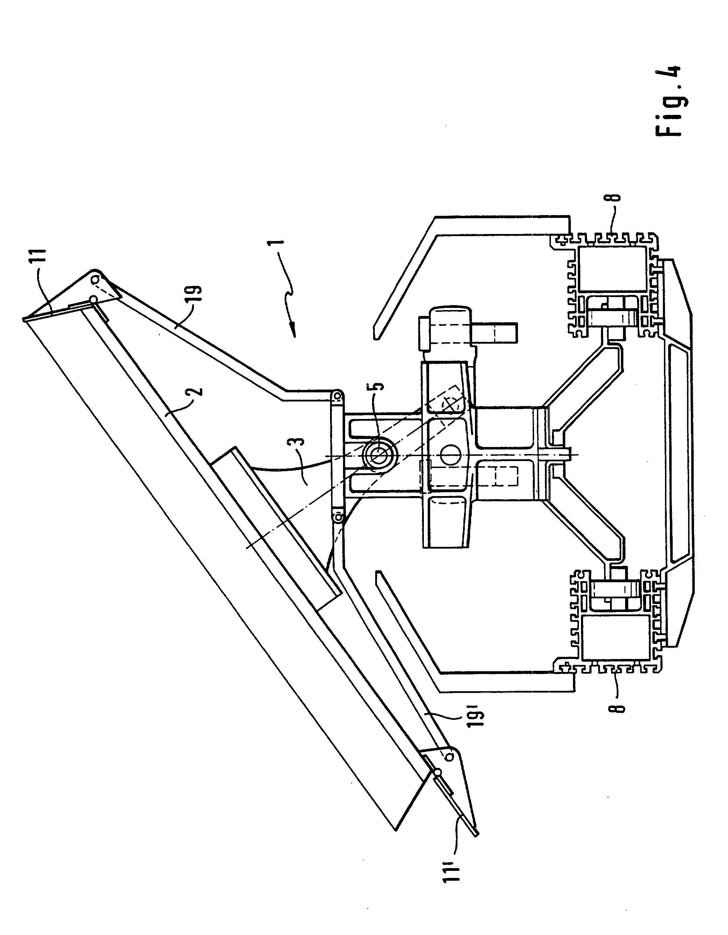

Der Tragboden 2 ist über eine mittig an seiner Unterseite angeordnete Säule 3 mit einer Kippachse 5 verbunden, um ihn in eine schräge Abgabestellung (s. Fig. 2,3) kippen zu können. Genauer gesagt ist der Tragboden 2 (mit der an ihm befestigten Säule 3) wahlweise nach rechts (s. Fig. 2,3) oder nach links (s. Fig. 4) zu kippen.

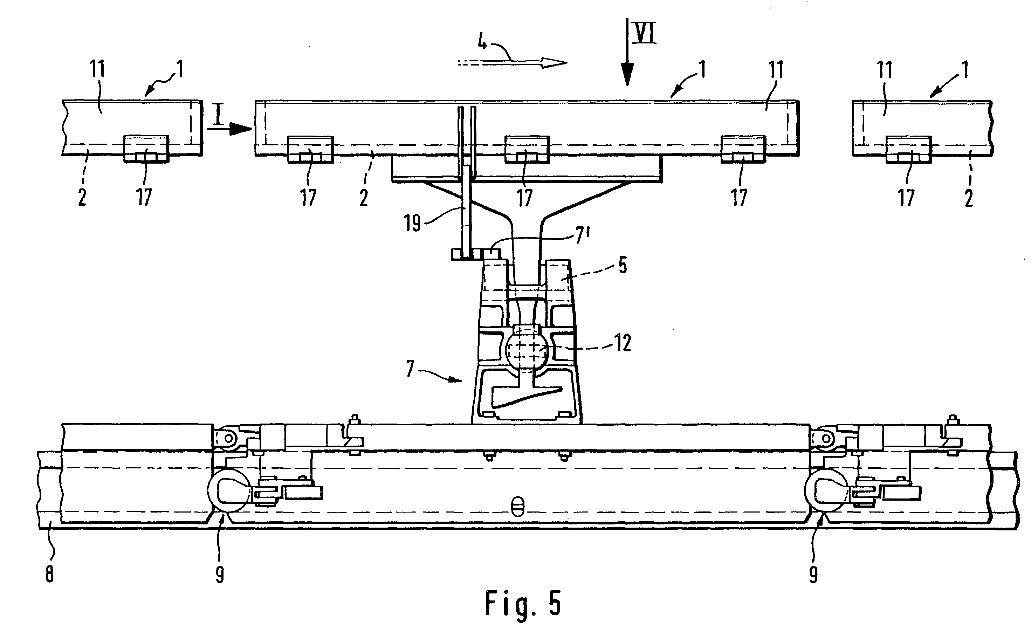

Das Kipp-Förderelement 1 ist (als Förderglied) Bestandteil eines (als Gliederförderer ausgebildeten) Sortierförderers (Sorters) zum Sortieren von nicht dargestellten Stückgutteilen, insbesondere Gepäckstücken, und mit Laufrollen 6, die drehbar an einem nicht kippbaren Unterteil 7 des Kipp-Förderelements 1 angeordnet sind, an einer aus zwei parallel zueinander angeordneten Schienen 8 bestehenden, in sich geschlossenen (endlosen) Führung des Sorters geführt und mittels eines nicht dargestellten Antriebs entlang der Führung 8 antreibbar. Einander benachbarte Kipp-Förderelemente 1,1 sind jeweils bei 9 (s. Fig. 5) gelenkig miteinander verbunden, so daß sie der Führung 8 folgen können.

An seinen Längsrändern 10,10' ist der Tragboden 2 jeweils mit einer Seitenwange 11 bzw. 11' versehen, die in der in Fig. 1 dargestellten Grundstellung des Tragbodens 2 einen seitlichen Anschlag für das von dem Tragboden 2 abgestützte Stückgutteil bilden, und bei dem dargestellten Ausführungsbeispiel unter einem Winkel α von etwa 110° zur Oberseite 2' des Tragbodens 2 verlaufen.

Obwohl dieses für die vorliegende Problematik und deren Lösung an sich unerheblich ist (hierfür kommt es allein darauf an, daß der Tragboden 2 um die Kippachse 5 seitlich kippbar ist), sei darauf verwiesen, daß sich die Säule 3 bei dem dargestellten Ausführungsbeispiel über die Kippachse 5 hinaus nach unten fortsetzt, und an ihrem unteren Endabschnitt bei 12 an ein Schubglied 13 angelenkt ist, welches rechtwinklig zur Mittelachse 14 des Kipp-Förderelements 1 in einer Führung 15 des Unterteils 7 des Kipp-Förderelements 1 geführt ist, wobei das Kipp-Förderelement 1 in seiner in Fig. 1 dargestellten Grundstellung durch Verriegelungsbolzen 16 verriegelt ist, und durch Eingriff eines nicht dargestellten Entriegelungsmittels quer zur Mittelachse 14 unter gleichzeitigem Kippen des Tragbodens 2 begrenzt quer zur Mittelachse 14 des Kipp-Förderelements 1 zu verschieben ist, wie dieses in der EP 0 664 262 A1 im einzelnen beschrieben ist, so daß hier auf eine detaillierte Beschreibung der Einleitung und Durchführung des Kippvorgangs verzichtet wird, weil es hierauf - wie ausgeführt - im einzelnen nicht ankommt.

Die Seitenwangen 11 bzw. 11' sind jeweils um eine parallel zu dem ihnen zugeordneten Längsrand 10 bzw. 10' des Tragbodens 2 verlaufende, durch mehrere Scharniergelenke 17 gebildete Schwenkachse 18 bzw. 18' am Tragboden 2 angelenkt. Außerdem sind die Seitenwangen 11 bzw. 11' jeweils mit Abstand zu ihrer Schwenkachse 18 bzw. 18' an einen quer zu ihrer Schwenkachse 18 bzw. 18' verlaufenden Lenker 19 bzw. 19' angelenkt, der an seinem anderen Ende bei 20 bzw. 20' mit Abstand zur Kippachse 5 am Kipp-Förderelement 1 angelenkt ist. Konkret ist jeder Lenker 19 bzw. 19' an seiner der ihm zugeordneten Seitenwange 11 bzw. 11' zugeordneten ersten Gelenkstelle 21 bzw. 21' an einem äußeren Ansatz 22 bzw. 22' der betreffenden Seitenwange 11 bzw. 11' angelenkt, und zwar an einem Ansatz 22 bzw. 22', der sich bis unter die Unterseite 2'' des Tragbodens 2 erstreckt, wobei der Lenker 19 bzw. 19' jeweils am unteren Abschnitt des Ansatzes 22 bzw. 22' (also unterhalb der Schwenkachse 18 bzw. 18') angelenkt ist, und wobei die Lenker 19 bzw. 19' jeweils an ihrer der ihnen zugeordneten Seitenwange 11 bzw. 11' abgekehrten zweiten Gelenkstelle 20 bzw. 20' jeweils an einem unteren Abschnitt 7' des Kipp-Förderelements 1 angelenkt sind, der beim seitlichen Kippen des Tragbodens 2 nicht mitgekippt wird, und zwar an einer Stelle, die der betreffenden Seitenwange 11 bzw. 11' zugekehrt ist.

Die genauen relativen Zuordnungen der beiden ersten und zweiten Gelenkstellen 21,21' bzw. 20,20' der Lenker 19,19' an den Ansätzen 22 bzw. 22' bzw. an dem nicht kippbaren Unterteil 7 lassen sich aufgrund der diversen Parameter in allgemeiner Form (d.h. für jeden denkbaren Anwendungsfall) nur schwer angeben. Wenn aber aufgrund der vorgegebenen Breite des Tragbodens der Abstand der Schwenkachse 18 bzw. 18' zur Mittelachse 14 festliegt und auch der Abstand der Kippachse 5 zum Tragboden 2 vorgewählt ist, und auch die Ausbildung der Seitenwangen 11,11' gewählt ist, läßt sich eine geeignete Lenkeranordnung bezüglich ihrer Gelenkstellen 21 bzw. 21' und 20 bzw. 20' iterativ verhältnismäßig einfach bestimmen. Nach vorläufiger Wahl der ersten Gelenkstelle 21 bzw. 21' unter den vorgegebenen Bedingungen unter Berücksichtigung des Umstands, daß der Abstand der ersten Gelenkstelle 21 bzw. 21' des Lenkers 19 bzw. 19' beim Verschwenken der Seitenwange 11 bzw. 11' um die Schwenkachse 18 bzw. 18' jeweils konstant bleiben muß, und daß ihr Schwenkwinkel (180°-α) dabei vorgegeben ist, läßt sich relativ rasch - ggfs. unter Veränderung des zunächst vorgegebenen Orts der ersten Gelenkstelle 21 bzw. 21' - der geeignete Ort für die zweite Anlenkstelle 20 bzw. 20' des Lenkers 19 bzw. 19' finden, und zwar auch dann, wenn der Tragboden 2 nicht nur einseitig (also entweder nach rechts oder nach links) kippbar ist, sondern beidseitig, und demgemäß außerdem dafür Sorge getragen werden muß, daß der einer Seitenwange 11 bzw. 11' zugeordnete Lenker 19 bzw. 19' keinen unverträglichen Zwang auf die ihm zugeordnete Seitenwange 11 bzw. 11' ausübt, wenn der Tragboden 2 zu der seitlich gegenüberliegenden Seite hin gekippt wird. Dieses schafft zwar für Kipp-Förderelemente 1, deren Tragboden 2 wahlweise (in Förderrichtung gesehen) nach rechts oder nach links zu kippen ist, eine zusätzliche Bedingung für die Ausbildung der Lenker 19,19' bzw. deren Gelenkstellen 20,21 bzw. 20',21', doch ist auch diese zusätzliche Bedingung durch iterative Schritte bei der Auswahl der ersten Gelenkstellen 21 bzw. 21' und zweiten Gelenkstellen 20 bzw. 20' ohne große Schwierigkeiten einzuhalten, wenn die Abstände der Schwenkachse 18 bzw. 18' zur Mittelachse 14 des Kipp-Förderelements 1 sowie der Kippachse 5 zur jeweiligen Schwenkachse 18 bzw. 18' bekannt sind. Wenn der Konstrukteur bei diesen Vorgaben feststellt, daß eine aufgefundene Lenkeranordnung zwar die Bedingung erfüllt, daß der Lenker beim Kippen des Förderelements 1 die dabei in Kipprichtung des Tragbodens 2 nach unten geschwenkte Seitenwange um den gewünschten Winkel relativ zum Tragboden 2 nach außen verschwenkt, dabei aber der der anderen Seitenwange zugeordnete Lenker dazu veranlaßt wird, ebenfalls eine Schwenkbewegung der ihm zugeordneten Seitenwange in Kipprichtung des Tragbodens 2 zu erzeugen, so braucht er lediglich durch Veränderung des ersten Gelenkpunkts 21 bzw. 21' relativ zur Schwenkachse 18 bzw. 18' oder/und Veränderung des zweiten Gelenkpunkts 20 bzw. 20' zur Kippachse 5 dafür Sorge zu tragen, daß es beim Hochschwenken eines Lenkers 19 bzw. 19' aufgrund einer entsprechenden Kippbewegung des Tragbodens 2 nicht mehr dazu kommt, daß die erste Gelenkstelle 21 bzw. 21' um die Schwenkachse 18 bzw. 18' der betreffenden Seitenwange 11 bzw. 11' in Kipprichtung des Tragbodens 2 geschwenkt wird, sondern daß die erste Gelenkstelle 21 bzw. 21' dabei entweder nicht oder entgegen der Kipprichtung des Tragbodens 2 geschwenkt wird. Letzteres ist deshalb unkritisch, weil die betreffende Seitenwange bei einem entsprechenden Kippen des Tragbodens 2, der ein seitliches Abrutschen zur gegenüberliegenden Seite des Tragbodens 2 zur Folge hat, keine Anschlagwirkung mehr auf das entsprechende Stückgutteil ausüben muß, so daß es insoweit unerheblich ist, ob diese Seitenwange beim Kippen des Tragbodens 2 noch in ihrer Anschlagstellung verbleibt oder nach außen weggeschwenkt wird. Wesentlich ist allein, daß der dieser Seitenwange zugeordnete Lenker 19 bzw. 19' bei einem entsprechenden Kippen des Tragbodens 2 in Richtung auf den gegenüberliegenden Längsrand 10 bzw. 10' des Tragbodens 2 diesem keine Schwenkbewegung im Sinne der Kippbewegung des Tragbodens 2 einprägt. Eine solche Lenkeranordnung ist jedoch, wie bereits ausgeführt, ohne besondere Schwierigkeiten durch iterative Schritte bei der Wahl der ersten und/ oder zweiten Gelenkstelle 21,21' bzw. 20,20' des Lenkers 19 bzw. 19' aufzufinden, wenn die bereits genannten Parameter bekannt sind, und im übrigen bekannt ist, daß die eine Seitenwange 11 bzw. 11' (spätestens) in der Kipp-Endstellung des Tragbodens 2 durch den ihr zugeordneten Lenker 19 bzw. 19' aus ihrer Anschlagstellung in eine (zweite) Stellung bewegt werden soll, in welcher sie im wesentlichen zu dem Tragboden 2 fluchtet.

Auch bei dem in der Zeichnung dargestellten Ausführungsbeispiel für ein gattungsgemäßes Kipp-Förderelement 1 mit einem ebenen, in seiner Grundstellung (Fig. 1) horizontalen Tragboden 2 liegt dessen Breite B und damit der Abstand der Längsränder 10,10' von der Mittelachse 14 ebenso fest wie der Abstand der Kippachse 5 zum Tragboden 2 sowie die Ausbildung der Seitenwangen 11,11' und deren relative Anordnung zum Tragboden 2. Sie sind bei dem dargestellten Ausführungsbeispiel jeweils um einen Winkel α von ca. 120° zur Oberseite 2' des Tragbodens 2 angestellt. Wenn sich der Konstrukteur für die höchstbevorzugte Ausgestaltung entscheidet, bei welcher die Seitenwangen 11,11' jeweils nach außen schwenkbar am Tragboden 2 angelenkt sind, liegen damit auch die Schwenkachsen 18,18' fest bzw. sind festzulegen. Damit kennt der Konstrukteur auch die beiderseitigen Kipp-Endstellungen des Tragbodens 2 und die dortigen ihm vorgegebenen Relativstellungen der Seitenwangen 11 bzw. 11' zum Tragboden 2 und kann die ersten Gelenkstellen 21,21' für die an die Seitenwangen 11,11' anzulenkenden Lenker 19,19' (vorläufig) mit jeweiligem Abstand zur zugeordneten Schwenkachse 18,18' unter konstruktiv zweckmäßigen Gesichtspunkten also so festlegen, daß die Gesamtbreite der von dem Tragboden 2 und den Seitenwangen 11,11' gebildeten Tragschale möglichst nicht vergrößert wird. Dabei kommt er schon unter diesem Gesichtspunkt zu ersten Gelenkstellen 21,21', die zweckmäßigerweise etwa unterhalb der jeweiligen Schwenkachse 18 bzw. 18' liegen, und kann nunmehr aufgrund der auch im übrigen vorgegebenen konstruktiven Verhältnisse mit Abstand zur Kippachse 5 vorläufige zweite Gelenkstellen 20,20' wählen, welche die Bedingung erfüllen, daß ihr Abstand zu der ihnen jeweils zugeordneten ersten Gelenkstelle 21 bzw. 21' in den beiden Kipp-Endstellungen des Tragbodens genauso groß wie in dessen Grundstellung ist. Liegen die dabei aufgefundenen zweiten Gelenkstellen 20,20' ungünstig zu der übrigen Konstruktion des Kipp-Förderelements 1, so läßt sich durch Korrektur der ersten Gelenkstellen 21,21' ggfs. nach einigem Probieren in iterativen Schritten eine geeignete Lenkeranordnung finden.

Bei dem dargestellten Ausführungsbeispiel ist der über die Säule 3 mittels der Kippachse 5 am nicht kippbaren Unterteil 7 des Kipp-Förderelements 1 angelenkte Tragboden 2 in seiner Grundstellung (Fig. 1) durch Verriegelungsbolzen 16 verriegelt. An einer nicht dargestellten Abgabestelle greift ein nicht dargestelltes Entriegelungsmittel mit ei-nem Nocken von unten her an dem ihm zugekehrten Verriegelungsbolzen 16 an, hebt diesen unter Entriegelung des Tragbodens nach oben an und führt dessen Kopf 16' in eine ebenfalls nicht dargestellte, als nach außen gekrümmte Schiene ausgebildete Weiche, welche bewirkt, daß das Schubglied 13 zu der entsprechenden Seite hin verschoben wird (s. Fig. 2, in welcher diese Weiche allerdings nicht dargestellt ist), so daß der Tragboden 2 mit der fest an ihm angeordneten Säule 3 zu der gegenüberliegenden Seite hin um die Kippachse 5 gekippt wird (s. Fig. 2,3), wobei bei diesem Ausführungsbeispiel die Kippachse 5 noch geringfügig abgesenkt wird, wie all dieses in der EP 0 664 262 A1 ausführlich beschrieben ist, auf welche hier ausdrücklich Bezug genommen wird. Auf die spezielle Art der Einleitung und Durchführung des Kippvorgangs kommt es jedoch im Rahmen der vorliegenden Erfindung nicht an, so daß insoweit auch auf eine genaue Beschreibung der diesbezüglichen Einzelheiten verzichtet worden ist.

Beim Kippen des Tragbodens 2 um die (dabei geringfügig abgesenkte) Kippachse 5 nach rechts (s. Fig. 2,3) wird jeder Punkt des Tragbodens und der mit ihm verbundenen Teile mit dem entsprechenden Abstand von der Kippachse 5 auf einem Kreisbogen um die Kippachse 5 bewegt. Dieses gilt also auch für die mit dem Tragboden 2 verbundenen Seitenwangen 11,11' und ihre Ansätze 22,22' und damit auch für die ersten Gelenkstellen 21,21'. Da diese nun aber jeweils mit einem Lenker 19 bzw. 19' am nicht kippbaren Unterteil 7 des Kipp-Förderelements 1 angelenkt sind, so daß ihr jeweiliger Abstand zur zweiten Gelenkstelle 20,20' konstant bleiben muß, und dieser Abstand bei der beim seitlichen Kippen des Tragbodens 2 abgesenkten Seitenwange 11 kleiner ist als der Abstand ihrer ersten Gelenkstelle 21 zur Kippachse 5, wird die erste Gelenkstelle 21 unter entsprechendem Verschwenken der abgesenkten Seitenwange 11 durch Schwenken um die Schwenkachse 18 zur Mitte des Kipp-Förderelements 1 hin an dieses heranbewegt, und zwar so weit, daß die Innenseite der abgesenkten Seitenwange 11 in der Kipp-Endstellung des Tragbodens 2 - unter geringem Versatz zur Oberseite 2' des Tragbodens um dessen Höhe - fluchtet.

Dagegen wird die beim Kippen des Tragbodens 2 nach oben geschwenkte Seitenwange (in den Fig. 2,3 also die Seitenwange 11') nicht verschwenkt, da der von ihrer ersten Gelenkstelle 21' dabei beschriebene Kreisbogen um die zweite Gelenkstelle 20' mit dem Kreisbogen im wesentlichen zusammenfällt, den sie beim Anheben des Lenkers 19' um die Kippachse 5 beschreibt.

Fig. 3 zeigt noch einmal in ausgezogenen Linien in Übereinstimmung mit Fig. 1 das Kipp-Förderelement 1 in der Grundstellung des Tragbodens 2 und darüberhinaus mit gestrichelten Linien mehrere Phasen des Kippvorgangs bis zum Erreichen der in Fig. 3 ebenfalls mit gestrichelten Linien eingezeichneten Kipp-Endstellung. Es ist erkennbar, wie sich die beim Kippen abgesenkte Seitenwange 11 aus ihrer in der Grundstellung des Tragbodens 2 von dieser hochstehenden Anschlagstellung sukzessiv nach außen verschwenkt, während die beim Kippvorgang angehobene Seitenwange 11' dabei in ihrer bereits in der Grundstellung vorhandenen Relativstellung zum Tragboden 2 verbleibt.

Wie Fig. 4 zeigt ergeben sich entsprechende Verhältnisse, wenn der Tragboden 2 stattdessen zur anderen Seite (in Fig. 4 also nach links) gekippt wird.

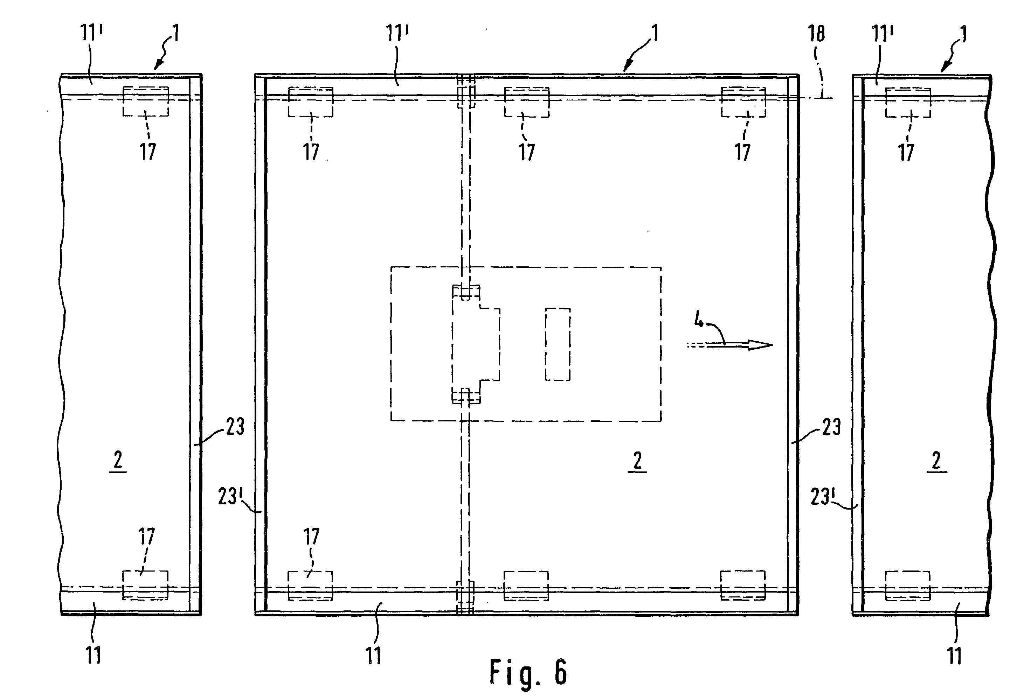

Fig. 5 zeigt eine teilweise Seitenansicht auf einen Sorter in Richtung des Pfeils V in Fig. 1 gesehen, und zwar ein vollständiges Kipp-Förderelement 1 sowie die beiden hieran nach vorn und hinten anschließenden Kipp-Förderelemente 1, die jeweils miteinander mit Gelenkverbindungen 9 im Bereich der Schienen 8 verbunden sind, und Fig. 6 zeigt eine Draufsicht auf die Darstellung gemäß Fig. 5 in Richtung des Pfeils VI in Fig. 5 gesehen unter Fortlassung der Schienen 8 und der hierin unmittelbar geführten Teile der Kipp-Förderelemente 1. Es ist erkennbar, daß außer den Seitenwangen 11,11' an den Querrändern des Tragbodens 2 jeweils eine feste Querwange 23 bzw. 23' angeordnet ist, so daß der Tragboden 2 jedes Kipp-Förderelement 1 zusammen mit den Seitenwangen 11,11' und den Querwangen 23,23' in der Grundstellung einen kastenförmigen Behälter bildet, wobei die Höhe h der Wangen 11,11', 23,23' über dem Tragboden 2 ggfs. erheblich höher als bei dem Ausführungsbeispiel sein kann.

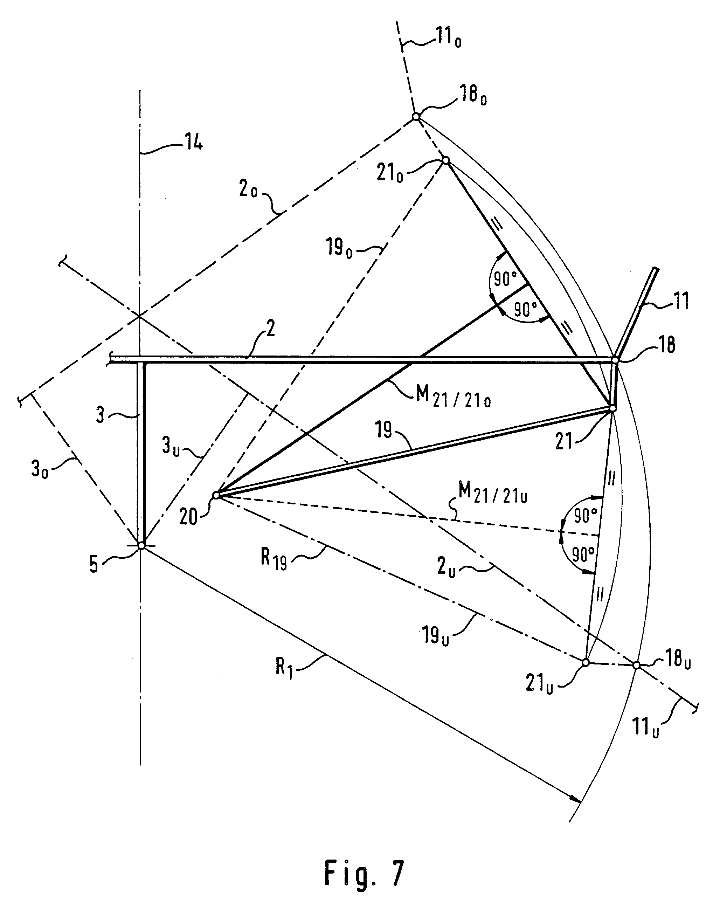

Unter Bezugnahme auf Fig. 7 sei noch nachgetragen, wie der Ort der an einem festen Abschnitt 7 bzw. 7' des Kippförderelementes 1 angeordneten zweiten Gelenkstelle 20 bzw. 20' einer Seitenwange 11 bzw. 11' aufgefunden worden ist bzw. aufgefunden werden kann. Dabei zeigt Fig. 7 in Übereinstimmung mit den Fig. 1 - 4 eine Querschnittdarstellung der rechten Seite. Die Bezugszeichen stimmen mit den vor- und nachstehend verwandten Bezugszeichen überein, wobei jedoch bestimmten Elementen bzw. Punkten in deren oberster Stellung jeweils der Index "o" und in deren unterster Stellung der Index "u" hinzugefügt worden ist. Es ist ohne weiteres erkennbar, daß der Ort der zweiten Gelenkstelle 20 der zugeordneten Seitenwange 11 bzw. deren Lenkers 19 durch den Schnittpunkt der Mittelsenkrechten M_{21/210} auf der Verbindungslinie 21-21ₒ zwischen der ersten Gelenkstelle in deren Grundstellung 21 und deren oberster Stellung 21o einerseits sowie der Mittelsenkrechten M_{21/21u} auf der Verbindungslinie 21-21ᵤ zwischen der ersten Gelenkstelle in deren Grundstellung 21 und in deren unterster Stellung 21u andererseits bestimmt ist. Das entsprechende gilt selbstverständlich für die zweite Gelenkstelle 20' des Lenkers 19'.

Zusammenfassend ist festzustellen, daß mit der beweglichen Anordnung der Seitenwangen an einem Kipp-Förderelement 1 die Möglichkeit geschaffen worden ist, behälterartig ausgebildete Tragelemente zu verwenden, ohne daß hierdurch die Abgabe eines von dem Tragboden 2 abgestützten Stückgutteils an der jeweiligen Abgabestelle behindert wird, wobei eine relativ zum Tragboden 2 angeordnete Seitenwange 11,11' auf unterschiedlichste Art und Weise am Kipp-Förderelement 1 angeordnet sein und betätigt werden kann, und es besonders zweckmäßig ist, wenn sie so angeordnet ist, daß sie bei einem entsprechenden Kippen des Tragbodens 2 selbsttätig aus ihrer Anschlagstellung in eine Stellung bewegt wird, in welcher sie ein von dem Tragboden 2 seitlich abrutschendes Stückgutteil nicht behindert, ohne daß es hierfür eines gesonderten Antriebs und eines Eingriffs von außen her bedarf.

### Bezugszeichenliste

- 1: Kipp-Förderelement
- 2: Tragboden (von 1)
- 2': Oberseite (von 2)
- 2'': Unterseite (von 2)
- 3: Säule
- 4: Förderrichtung
- 5: Kippachse
- 6: Laufrollen (von 1)
- 7: (nicht kippbares) Unterteil (von 1)
- 8: Schienen (= Führung für 1)
- 9: Gelenkverbindung
- 10, 10': Längsränder (von 2)
- 11,11': Seitenwange
- 12: Anlenkstelle
- 13: Schubglied
- 14: Mittelachse (von 1)
- 15: Führung
- 16: Verriegelungsbolzen
- 16': Kopf (von 16)
- 17: Scharniergelenk
- 18,18': Schwenkachse
- 19, 19': Lenker
- 20,20': zweite Gelenkstelle (von 19 bzw. 19' an 22 bzw. 22')
- 21, 21': erste Gelenkstelle (von 19 bzw. 19' an 7')
- 22,22': Ansatz (an 11 bzw. 11')
- 23,23': Querwange

## Patentansprüche

1. (Kipp-)Förderelement (1) für einen Sortierförderer (Sorter) zum Sortieren von Stückgutteilen, insb. Gepäckstücken, dessen (Kipp-)Förderelemente (1) in der Art eines Gliederförderers gelenkig miteinander verbunden und entlang einer i.a. in sich geschlossenen, endlosen Führung (8) gerührt mittels eines Antriebes in Förderrichtung (4) antreibbar sind, wobei die (Kipp-)Förderelemente (1) jeweils einen Tragboden (2) zum Abstützen eines zu sortierenden Stückgutteils aufweisen, der zwecks seitlicher Abgabe eines auf dem Tragboden (2) befindlichen Stückgutteils an einer vorgegebenen Abgabestelle aus einer Grundstellung (= Förderstellung) um eine i.w. in seiner Längsrichtung (= Förderrichtung (4)) verlaufende Kippachse (5) seitlich in wenigstens eine schräge Abgabestellung zu kippen ist, und an dessen i.w. in seiner Längsrichtung (4) verlaufendem einen Längsrand (z.B. 10) eine Seitenwange (11) angeordnet ist, die in der Grundstellung des Tragbodens (2) einen seitlichen Anschlag für ein von dem Tragboden (2) abgestütztes Stückgutteil bildet, wobei die Seitenwange (11) mittels einer Lenkeranordnung (19) so relativ zum Tragboden (2) beweglich am (Kipp-)Förderelement (1) angeordnet ist. daß sie beim seitlichen Kippen des (Kipp-)Förderelementes (1) an der vorgegebenen Abgabestelle aus ihrer in der Grundstellung des Tragbodens (2) vorhandenen, anschlagbildenden Stellung selbsttätig und geführt um eine im bzw. parallel zum betreffenden Längsrand (10) des Tragbodens (2) verlaufende, durch wenigstens ein Scharniergelenk (17) od.dgl. gebildete Schwenkachse (18) nach außen in eine zweite Stellung geschwenkt wird, in welcher sie nicht mehr anschlagbildend über die Oberseite (2') des Tragbodens (2) vorsteht, wobei die Seitenwange (11) an einem eine erste Gelenkstelle (21) bildenden äußeren Ansatz (22) mit Abstand zu ihrer Schwenkachse (18) an wenigstens einen quer zu ihrer Schwenkachse (18) verlaufenden Lenker (19) angelenkt ist, der an seinem anderen Ende (bei 20) mit Abstand zur Kippachse (5) am (Kipp-)Förderelement (1) angelenkt ist, **gekennzeichnet durch** einen in an sich bekannter Weise i.w. ebenen Tragboden (2), der in seiner Grundstellung (= Förderstellung) in an sich bekannter Weise i.w. horizontal verläuft, und an dessen beiden Längsrändern (10; 10') in an sich bekannter Weise jeweils eine Seitenwange (11 bzw. 11') angeordnet ist, die in der Grundstellung des Tragbodens (2) einen seitlichen Anschlag bildet, wobei die Lenker (19; 19') jeweils an ihrer ihrer Seitenwange (11; 11') abgekehrten zweiten Gelenkstelle (20; 20') an einem Abschnitt (7') des (Kipp-)Förderelementes (1) angelenkt sind, der beim seitlichen Kippen des Tragbodens (2) nicht mitgekippt wird.

2. (Kipp-)Förderelement nach Anspruch 1, **dadurch gekennzeichnet, daß** die zweite Gelenkstelle (20; 20') eines Lenkers (19; 19') an der der betreffenden Seitenwange (11; 11') zugekehrten Seite des (Kipp-)Förderelementes (1) angeordnet ist.

3. (Kipp-)Förderelement nach Anspruch 1, **dadurch gekennzeichnet, daß** die zweite Gelenkstelle (20; 20') eines Lenkers (19; 19') oberhalb der Kippachse (5) angeordnet ist.

4. (Kipp-)Förderelement nach Anspruch 1, **dadurch gekennzeichnet, daß** der Ort der an einem festen Abschnitt (7; 7') des (Kipp-)Förderelementes (1) angeordneten zweiten Gelenkstelle (20; 20') einer Seitenwange (11; 11') bzw. deren Lenkers (19; 19') durch den Schnittpunkt der Mittelsenkrechten (M_{21/21o}) auf der Verbindungslinie (21-21o) zwischen der ersten Gelenkstelle in deren Grundstellung (21) und in deren oberster Stellung (21ₒ) einerseits sowie der Mittelsenkrechten (M_{21/21u}) auf der Verbindungslinie (21-21ᵤ) zwischen der ersten Gelenkstelle in deren Grundstellung (21) und in deren unterster Stellung (21ᵤ) andererseits bestimmt ist (Fig. 7).

5. (Kipp-)Förderelement nach einem oder mehreren der vorhergehenden Ansprüche, **dadurch gekennzeichnet, daß** die Lenker (19; 19') so ausgebildet bzw. angeordnet sind, daß ihre erste Gelenkstelle (21; 21') beim Kippen des Tragbodens (2) aus dessen Grundstellung in Richtung auf die betreffende Seitenwange (11; 11') relativ zum Tragboden (2) um die betreffende Schwenkachse (18; 18') im gleichen Drehsinn wie die Kippbewegung des Tragbodens (2) so verschwenkt wird, daß die dem Tragboden (2) zugekehrte Innenseite der betreffenden Seitenwange (11; 11') spätestens in der Kipp-Endstellung des Tragbodens (2) zu dem der Seitenwange (11; 11') benachbarten Abschnitt der Oberseite (2') des Tragbodens (2) fluchtet bzw. ggf. nach unten versetzt parallel hierzu verläuft.

6. (Kipp-)Förderelement (1) nach Anspruch 5, dessen Tragboden (2) wahlweise beidseitig um die Kippachse (5) zu kippen ist, **dadurch gekennzeichnet, daß** die Lenker (19; 19') so ausgebildet bzw. angeordnet sind, daß ihre erste Gelenkstelle (21; 21') beim seitlichen Kippen des Tragbodens (2) aus dessen Grundstellung in Richtung auf die einem Lenker (19; 19') gegenüberliegenden Seite nicht relativ zum Tragboden (2) oder entgegen der Kipprichtung verschwenkt wird.

7. (Kipp-)Förderelement nach Anspruch 6, **dadurch gekennzeichnet, daß** die beiden Gelenkstellen (21, 20; 21', 20') des Lenkers (19; 19') relativ zueinander sowie relativ zur Kippachse (5) und zur Schwenkachse (18; 18') so angeordnet sind, daß die erste Gelenkstelle (21; 21') bei einem durch den Kippvorgang des Tragbodens (2) ausgelösten Hochschwenken des Lenkers (19; 19') um dessen zweite Gelenkstelle (20; 20') auf einem Kreisbogen um die zweite Gelenkstelle (20; 20') bewegt wird, der im Bereich des Bewegungspfades der ersten Gelenkstelle (21; 21') zwischen ihrer in der Grundstellung des Tragbodens (2) eingenommenen Position und ihrer in der Kipp-Endstellung des Tragbodens (2) eingenommenen höchsten Position i.w. mit einem Kreis um die Kippachse (5) zusammenfällt, dessen Radius durch den Abstand der Kippachse (5) zur ersten Gelenkstelle (21; 21') in der Grundstellung des Tragbodens (2) bestimmt ist.

8. (Kipp-)Förderelement nach Anspruch 7, **dadurch gekennzeichnet, daß** die Gelenkstellen (21, 20; 21', 20') des Lenkers (19; 19'), die Kippachse (5) und die Schwenkachse (18; 18') jedes Lenkers (19; 19') relativ zueinander so angeordnet sind, daß die erste Gelenkstelle (21; 21') bei einem durch den Kippvorgang des Tragbodens (2) ausgelösten Herunterschwenken des Lenkers (19; 19') um dessen zweite Gelenkstelle (20; 20') auf einem Kreisbogen um die zweite Gelenkstelle (20; 20') bewegt wird, der im Bereich des Bewegungspfades der ersten Gelenkstelle (21; 21') innerhalb des Kreises um die Kippachse (5) mit dem durch den Abstand der Kippachse (5) zur ersten Gelenkstelle (21; 21') bestimmten Radius in der Grundstellung des Tragbodens (2) liegt.

9. (Kipp-)Förderelement nach Anspruch 1, **dadurch gekennzeichnet, daß** sich der Ansatz (22; 22') bis unter die Unterseite (2") des Tragbodens (2) erstreckt, und daß die Lenker (19; 19') jeweils am unteren Abschnitt des Ansatzes (22; 22') der ihnen zugeordneten Seitenwange (11; 11') angelenkt sind.

10. Kipp-Förderelement nach Anspruch 4, **dadurch gekennzeichnet, daß** der Lenker (19;19') so ausgebildet bzw. angeordnet ist, daß seine erste Gelenkstelle (21;21') beim Kippen des Tragbodens (2) aus dessen Grundstellung in Richtung auf die betreffende Seitenwange (11;11') relativ zum Tragboden (2) um die betreffende Schwenkachse (18;18') im gleichen Drehsinn wie die Kippbewegung des Tragbodens (2) so verschwenkt wird, daß die dem Tragboden (2) zugekehrte Innenseite der betreffenden Seitenwange (11;11') spätestens in der Kipp-Endstellung des Tragbodens (2) zu dem der Seitenwange (11;11') benachbarten Abschnitt der Oberseite (2') des Tragbodens (2) fluchtet bzw. ggfs. nach unten versetzt parallel hierzu verläuft.

11. Kipp-Förderelement nach Anspruch 10, dessen Tragboden wahlweise beidseitig um die Kippachse zu kippen ist, **dadurch gekennzeichnet, daß** der Lenker (19;19') so ausgebildet bzw. angeordnet ist, daß seine erste Gelenkstelle (21;21') beim seitlichen Kippen des Tragbodens (2) aus dessen Grundstellung in Richtung auf die dem Lenker (19;19') gegenüberliegende Seite nicht relativ zum Tragboden (2) oder entgegen der Kipprichtung verschwenkt wird.

12. Kipp-Förderelement nach Anspruch 11, **dadurch gekennzeichnet, daß** die beiden Gelenkstellen (21,20;21',20') des Lenkers (19;19') relativ zueinander sowie relativ zur Kippachse (5) und zur Schwenkachse (18;18') so angeordnet sind, daß die erste Gelenkstelle (21;21') bei einem durch den Kippvorgang des Tragbodens (2) ausgelösten Hochschwenken des Lenkers (19;19') um dessen zweite Gelenkstelle (20;20') auf einem Kreisbogen um die zweite Gelenkstelle (20;20') bewegt wird, der im Bereich des Bewegungspfades der ersten Gelenkstelle (21;21') zwischen ihrer in der Grundstellung des Tragbodens (2) eingenommenen Position und ihrer in der Kipp-Endstellung des Tragbodens (2) eingenommenen höchsten Position im wesentlichen mit einem Kreis um die Kippachse (5) zusammenfällt, dessen Radius durch den Abstand der Kippachse (5) zur ersten Gelenkstelle (21;21') in der Grundstellung des Tragbodens (2) bestimmt ist.

13. Kipp-Förderelement nach Anspruch 12, **dadurch gekennzeichnet, daß** die Gelenkstellen (21,20;21',20') des Lenkers (19;19'), die Kippachse (5) und die Schwenkachse (18;18') jedes Lenkers (19;19') relativ zueinander so angeordnet sind, daß die erste Gelenkstelle (21;21') bei ei-nem durch den Kippvorgang des Tragbodens (2) ausgelösten Herunterschwenken des Lenkers (19;19') um dessen zweite Gelenkstelle (20;20') auf einem Kreisbogen um die zweite Gelenkstelle (20;20') bewegt wird, der im Bereich des Bewegungspfades der ersten Gelenkstelle (21;21') innerhalb des Kreises um die Kippachse (5) mit dem durch den Abstand der Kippachse (5) zur ersten Gelenkstelle (21;21') bestimmten Radius in der Grundstellung des Tragbodens (2) liegt.

14. Kipp-Förderelement nach Anspruch 7, **dadurch gekennzeichnet, daß** der Ort der an einem festen Abschnitt (7, 7') des Kipp-Förderelementes (1) angeordneten zweiten Gelenkstelle (20, 20') einer Seitenwange (11, 11') bzw. deren Lenkers (19, 19') durch den Schnittpunkt der Mittelsenkrechten (M_{21/21o}) auf der Verbindungslinie (21-21o) zwischen der ersten Gelenkstelle in deren Grundstellung (21) und in deren oberster Stellung (21o) einerseits sowie der Mittelsenkrechten (M_{21/21u}) auf der Verbindungslinie (21-21u) zwischen der ersten Gelenkstelle in deren Grundstellung (21) und in deren unterster Stellung (21u) andererseits bestimmt ist (Fig. 7).

## Claims

1. A (tilting) conveying element (1) for a sorting conveyor (sorter) for sorting unit loads, particularly baggage, comprising (tilting) conveying elements (1) in the form of an apron conveyor and pivotably interconnected and guided along a usually closed endless guide (8) and drivable by a drive in the conveying direction (4), wherein the (tilting) conveying elements (1) each comprise a tray (2) for supporting a unit load for sorting and tiltable laterally, in order laterally to deliver a unit load on the tray (2) to a preset delivery station, from a basic position (= conveying position) around an axis (5) extending substantially in its longitudinal direction (= conveying direction 4) into at least one sloping delivery station, and a side cheek (11) is disposed on a longitudinal edge (e.g. 10) of the tray extending substantially in the longitudinal direction (4) thereof and forms a lateral abutment for a unit load supported by the tray (2) when the tray (2) is in the basic position, wherein the cheek (11) is disposed via a control-lever arrangement (19) so as to be movable on the (tilting) conveying element relative to the tray (2) so that when the (tilting) conveying element (1) tilts sideways at the preset delivery station the cheek is automatically swung out of a position where it forms an abutment when the tray (2) is in its basic position and, guided by a pivoting axis (18) formed by at least one hinge joint (17) or the like and extending in or parallel to the respective longitudinal edge (10) of the tray (2); is swung outwards into a second position in which the cheek no longer forms an abutment and projects beyond the top (2') of the tray (2), wherein the side cheek (11) at an outer projection (22) forming a first pivot (21) is pivoted at a distance from its pivoting axis (18) to at least one control lever (19) extending transversely to its pivoting axis (18), the other end of the lever being pivoted (at 20) to the (tilting) conveying element (1) at a distance from the tilting axis (5), **characterised by** a tray (2) which in known manner is substantially flat and in its basic position (= conveying position) extends in known manner substantially horizontally and on each of its two side edges (10; 10') in known manner has a side cheek (11, 11') which forms a side abutment when the tray (2) is in its basic position, wherein the control levers (19; 19') at their respective pivots (20; 20') remote from their side cheek (11; 11') are pivoted to a portion (7') of the (tilting) conveying element (1) which is not tilted when the tray (2) is tilted sideways.

2. A (tilting) conveying element according to claim 1, **characterised in that** the second pivot (20; 20') of a control lever (19; 19') is disposed on the side of the (tilting) conveying element (1) facing the respective side cheek (11; 11').

3. A (tilting) conveying element according to claim 1, **characterised in that** the second pivot (20; 20') of a control lever (19; 19') is disposed above the tilting axis (5).

4. A (tilting) conveying element according to claim 1, **characterised in that** the position of the second pivot (20; 20') of a side cheek (11; 11') or of its control lever (19; 19') disposed on a fixed portion (7; 7') of the (tilting) conveying element (1) is defined by the point of intersection between on the one hand the central perpendicular (M_{21/210}) on the connecting line (21-21₀) between the basic position (21) and the top position (21₀) of the first pivot and on the other hand the central perpendicular (M_{21/21u}) on the connecting line (21-21ᵤ) between the basic position (21) and the bottom position (21ᵤ) of the first pivot (Fig. 7).

5. A (tilting) conveying element according to one or more of the preceding claims, **characterised in that** the control levers (19; 19') are so constructed or disposed that when the tray (2) tilts out of its basic position towards the respective side cheek (11, 11'), the first pivot (21; 21') is swung relative to the tray (2) around the respective axis of rotation (18; 18') in the same direction as the tilting motion of the tray (2), so that the inner side of the respective side cheek (11; 11') facing the tray (2), at the latest when the tray (2) is in the tilted end position, is in line with the portion of the top (2') of the tray (2) neighbouring the side cheek (11; 11') or if required extends parallel thereto but offset downwards.

6. A (tilting) conveying element (1) according to claim 5, comprising a tray (2) which is tiltable around the tilting axis (5) on either side as required, **characterised in that** the control levers (19; 19') are so designed or disposed that when the tray (2) tilts sideways out of its basic position towards the side opposite a control lever (19; 19'), the first pivot (21; 21') is not rotated relative to the tray (2) or against the direction of tilting.

7. A (tilting) conveying element according to claim 6, **characterised in that** the two pivots (21, 20; 21', 20') of the control lever (19; 19') are so disposed relative to one another and relative to the tilting axis (5) and to the axis of rotation (18; 18') that the first pivot (21; 21'), in the event of upward pivoting of the control lever (19; 19') triggered by tilting of the tray (2), is moved around its second pivot (20; 20') on a circular arc which, in the region of the path of motion of the first pivot (21; 21') between its position in the basic position of the tray (2) and its highest position adopted when the tray (2) is in the tilted end position, coincides substantially with a circle around the tilting axis (5), the radius of the circle being determined by the distance of the tilting axis (5) from the first pivot (21; 21') when the tray (2) is in the basic position.

8. A (tilting) conveying element according to claim 7, **characterised in that** the pivots (21, 20; 21', 20') of the control lever (19; 19'), the tilting axis (5) and the axis of rotation (18, 18') of each control lever (19, 19') are so disposed relative to one another that the first pivot (21; 21'), in the event of downward pivoting of the control lever (19; 19') triggered by tilting of the tray (2), is moved around its second pivot (20; 20') on a circular arc which, in the region of the path of motion of the first pivot (21; 21') lies within the circle round the tilting axis (5) having the radius determined by the distance of the tilting axis (5) from the first pivot (21; 21') when the tray (2) is in the basic position.

9. A (tilting) conveying element according to claim 1, **characterised in that** the projection (22; 22') extends under the underside (2'') of the tray (2) and each control lever (19; 19') is pivoted to the respective lower portion of the projection (22; 22') on the associated side cheek (11; 11').

10. A tilting conveying element according to claim 4, **characterised in that** the control levers (19; 19') are so constructed or disposed that when the tray (2) tilts out of its basic position towards the respective side cheek (11, 11'), the first pivot (21; 21') is swung relative to the tray (2) around the respective axis of rotation (18; 18') in the same direction as the tilting motion of the tray (2), so that the inner side of the respective side cheek (11; 11') facing the tray (2), at the latest when the tray (2) is in the tilted end position, is in line with the portion of the top (2') of the tray (2) neighbouring the side cheek (11; 11') or if required extends parallel thereto but offset downwards.

11. A tilting conveying element according to claim 10, comprising a tray which is tiltable around the tilting axis on either side as required, **characterised in that** the control levers (19; 19') are so designed or disposed that when the tray (2) tilts sideways out of its basic position towards the side opposite a control lever (19; 19'), the first pivot (21; 21') is not rotated relative to the tray (2) or against the direction of tilting.

12. A tilting conveying element according to claim 11, **characterised in that** the two pivots (21, 20; 21', 20') of the control lever (19; 19') are so disposed relative to one another and relative to the tilting axis (5) and to the axis of rotation (18; 18') that the first pivot (21; 21'), in the event of upward pivoting of the control lever (19; 19') triggered by tilting of the tray (2), is moved around its second pivot (20; 20') on a circular arc which, in the region of the path of motion of the first pivot (21; 21') between its position adopted in the basic position of the tray (2) and its highest position adopted when the tray (2) is in the tilted end position, coincides substantially with a circle around the tilting axis (5), the radius of the circle being determined by the distance of the tilting axis (5) from the first pivot (21, 21') when the tray (2) is in the basic position.

13. A tilting conveying element according to claim 12, **characterised in that** the pivots (21, 20; 21', 20') of the control lever (19; 19'), the tilting axis (5) and the axis of rotation (18, 18') of each control lever (19, 19') are so disposed relative to one another that the first pivot (21; 21'), in the event of downward pivoting of the control lever (19; 19') triggered by tilting of the tray (2), is moved around its second pivot (20; 20') on a circular arc which, in the region of the path of motion of the first pivot (21; 21') lies within the circle round the tilting axis (5) having the radius determined by the distance of the tilting axis (5) from the first pivot (21; 21') when the tray (2) is in the basic position.

14. A tilting conveying element according to claim 7, **characterised in that** the position of the second pivot (20; 20') of a side cheek (11; 11') or of its control lever (19; 19') disposed on a fixed portion (7; 7') of the tilting conveying element (1) is defined by the point of intersection between on the one hand the central perpendicular (M_{21/210}) on the connecting line (21-21₀) between the basic position (21) and the top position (21₀) of the first pivot and on the other hand the central perpendicular (M_{21/21u}) on the connecting line (21-21ᵤ) between the basic position (21) and the bottom position (21ᵤ) of the first pivot (Fig. 7).

## Revendications

1. Elément de convoyeur (basculant) (1) pour un convoyeur de triage (trieur) pour trier des éléments de colis, en particulier des bagages, dont les éléments de convoyeur (basculant) (1) sont assemblés les uns aux autres par articulation à la façon d'un convoyeur articulé et sont guidés le long d'une glissière de guidage sans fin (8) généralement fermée et peuvent être actionnés au moyen d'un entraînement dans le sens d'avancement (4), les éléments de convoyeur (basculant) (1) présentant chacun un plancher porteur (2) pour supporter un élément de colis à trier, le plancher porteur (2) peut être basculé latéralement dans au moins une position de dépose inclinée autour d'un axe de basculement (5) suivant essentiellement le sens longitudinal (= direction de convoyage) pour la distribution latérale d'un colis se trouvant sur le plancher porteur (2) vers un lieu de dépose prédéfini à parti d'une position initiale (= position de convoyage (4)) ; un limon (11) est aménagé dans la bordure longitudinale (par exemple 10) suivant essentiellement le sens longitudinal (4) du plancher porteur et forme, en position initiale du plancher porteur (2), une butée latérale pour un élément de colis supporté par le plancher porteur (2), le limon (11) est disposé dans l'élément de convoyeur (basculant) (1) de manière mobile au moyen d'une disposition de bras oscillant (19) de sorte que par rapport au plancher porteur (2) il bascule automatiquement vers l'extérieur dans une deuxième position lors du basculement latéral de l'élément de convoyeur (basculant) (1) en position de dépose prédéterminée à partir de sa position formant butée telle qu'elle existe dans la position initiale du plancher porteur (2) tout en étant guidé autour d'un axe de pivotement (18) passant dans ou parallèle à la bordure longitudinale (10) du plancher porteur (2) formé par au moins une articulation (17) ou un élément de ce genre ; dans cette position, le limon ne dépasse plus au-dessus de la face supérieure (2') du plancher porteur (2) en formant butée, le limon (11) étant articulé sur une butée externe (22) formant un premier point d'articulation (21) avec un écartement par rapport à son axe de pivotement (18) sur au moins un bras oscillant (19) passant transversalement à son axe de pivotement (18), le bras oscillant étant articulé à son autre extrémité (vers 20) sur l'élément de convoyeur (basculant) (1) avec un écartement par rapport à l'axe de basculement (5), **caractérisé par** un plancher porteur (2) essentiellement plan déjà connu en soi qui, dans sa position initiale (= position de convoyage) fonctionne horizontalement d'une manière connue en soi et dans chacune des deux bordures longitudinales (10 ; 10') duquel un limon (11 ou, selon le cas, 11') est disposé d'une manière connue en soi ; le limon forme une butée latérale dans la position initiale du plancher porteur (2), les bras oscillants (19 ; 19') étant articulés à leur deuxième point d'articulation (20 ; 20') éloigné de leur limon (11 ; 11') sur un segment (7') de l'élément de convoyeur (basculant) (1) qui ne bascule pas en même temps que le basculement latéral du plancher porteur (2).

2. Elément de convoyeur (basculant) selon la revendication 1, **caractérisé en ce que** le deuxième point d'articulation (20 ; 20') d'un bras oscillant (19 ; 19') est placé sur le côté de l'élément de convoyeur (basculant) (1) tourné ver le limon (11 ; 11') concerné.

3. Elément de convoyeur (basculant) selon la revendication 1, **caractérisé en ce que** le deuxième point d'articulation (20 ; 20') d'un bras oscillant (19 ; 19') est placé au-dessus de l'axe de basculement (5).

4. Elément de convoyeur (basculant) selon la revendication 1, **caractérisé en ce que** l'emplacement du deuxième point d'articulation (20 ; 20') d'un limon (11 ; 11') ou, selon le cas, de son bras oscillant (19 ; 19') disposé dans un segment fixe (7 ; 7') de l'élément de convoyeur (basculant) (1) est déterminé par le point d'intersection de la médiatrice (M_{21/21o}) sur la ligne de jonction (21 - 21o) entre le premier point d'articulation dans sa position initiale (21) et dans sa position supérieure (21ₒ) d'une part, et de la médiatrice (M_{21/21u}) sur la ligne de jonction (21 - 21ᵤ) entre le premier point d'articulation dans sa position initiale (21) et dans sa position inférieure (21ᵤ) d'autre part (fig. 7).

5. Elément de convoyeur (basculant) selon une ou plusieurs des revendications précédentes, **caractérisé en ce que** les bras oscillants (19 ; 19') sont formés ou disposés de telle façon que, lors du basculement du plancher porteur (2) de sa position initiale vers le limon concerné (11 ; 11') par rapport au plancher porteur (2), leur premier point d'articulation (21 ; 21') pivote autour de l'axe de pivotement concerné (18 ; 18') dans le même sens de rotation que le mouvement de basculement du plancher porteur (2) de telle façon que la face intérieure tournée vers le plancher porteur (2) du limon concerné (11 ; 11') s'aligne sur le segment contigu au limon (11 ; 11') de la face supérieure (2') du plancher porteur (2) ou, le cas échéant, court parallèlement à lui, décalé vers le bas, au plus tard en position extrême de basculement du plancher porteur (2).

6. Elément de convoyeur (basculant) (1) selon la revendication 5 dont le plancher porteur (2) peut basculer au choix de chaque côté de l'axe de basculement (5), **caractérisé en ce que** les bras oscillants (19 ; 19') sont formés ou disposés de telle façon que, lors du basculement latéral du plancher porteur (2) de sa position initiale vers le côté opposé à un bras oscillant (19 ; 19'), leur premier point d'articulation (21 ; 21') ne pivote pas par rapport au plancher porteur (2) ou en sens inverse du basculement.

7. Elément de convoyeur (basculant) selon la revendication 6, **caractérisé en ce que** les deux points d'articulation (21, 20 ; 21', 20') du bras oscillant (19 ; 19') sont disposés l'un par rapport à l'autre ainsi que par rapport à l'axe de basculement (5) et à l'axe de pivotement (18 ; 18') de telle façon que, le premier point d'articulation (21 ; 21') lors d'un basculement vers le haut du bras oscillant (19 ; 19') déclenché par le basculement du plancher porteur (2) autour de son deuxième point d'articulation (20 ; 20') se déplace sur un arc de cercle autour du deuxième point d'articulation (20 ; 20'), l'arc de cercle dans la zone de la trajectoire du mouvement du premier point d'articulation (21 ; 21') entre sa position occupée en position initiale du plancher porteur (2) et sa position supérieure occupée en position extrême de basculement du plancher porteur (2) correspondant essentiellement à un cercle autour de l'axe de basculement (5) dont le rayon est déterminé par l'écartement entre l'axe de basculement (5) et le premier point d'articulation (21 ; 21') en position initiale du plancher porteur (2).

8. Elément de convoyeur (basculant) selon la revendication 7, **caractérisé en ce que** les points d'articulation (21, 20 ; 21', 20') du bras oscillant (19 ; 19'), l'axe de basculement (5) et l'axe de pivotement (18 ; 18') de chaque bras oscillant (19 ; 19') sont disposés l'un par rapport à l'autre de telle façon que le premier point d'articulation (21 ; 21') lors d'un basculement vers le bas du bras oscillant (19 ; 19') déclenché par le basculement du plancher porteur (2) autour de son deuxième point d'articulation (20 ; 20') se déplace sur un arc de cercle autour du deuxième point d'articulation (20 ; 20'), l'arc de cercle se trouvant dans la zone de la trajectoire du mouvement du premier point d'articulation (21 ; 21') à l'intérieur du cercle autour de l'axe de basculement (5) avec le rayon déterminé par l'écartement entre l'axe de basculement (5) et le premier point d'articulation (21 ; 21') en position initiale du plancher porteur (2).

9. Elément de convoyeur (basculant) selon la revendication 1, **caractérisé en ce que** la butée (22 ; 22') s'étend jusque sous la face inférieure (2'') du plancher porteur (2) et **en ce que** les bras oscillants (19 ; 19') sont articulés chacun dans la section inférieure de la butée (22 ; 22') du limon (11 ; 11') qui leur correspond.

10. Elément de convoyeur basculant selon la revendication 4, **caractérisé en ce que** le bras oscillant (19 ; 19') est formé ou disposé de telle façon que, lors du basculement du plancher porteur (2) de sa position initiale vers le limon concerné (11 ; 11') par rapport au plancher porteur (2), son premier point d'articulation (21 ; 21') pivote autour de l'axe de pivotement concerné (18 ; 18') dans le même sens de rotation que le mouvement de basculement du plancher porteur (2) de telle façon que la face intérieure tournée vers le plancher porteur (2) du limon concerné (11 ; 11') s'aligne sur le segment contigu au limon (11 ; 11') de la face supérieure (2') du plancher porteur (2) ou, le cas échéant, court parallèlement à lui, décalé vers le bas, au plus tard en position extrême de basculement du plancher porteur (2).

11. Elément de convoyeur basculant selon la revendication 10 dont le plancher porteur (2) peut basculer au choix de chaque côté de l'axe de basculement, **caractérisé en ce que** le bras oscillant (19 ; 19') est formé ou disposé de telle façon que, lors du basculement latéral du plancher porteur (2) de sa position initiale vers le côté opposé à un bras oscillant (19 ; 19'), son premier point d'articulation (21 ; 21') ne pivote pas par rapport au plancher porteur (2) ou en sens inverse du basculement.

12. Elément de convoyeur basculant selon la revendication 11, **caractérisé en ce que** les deux points d'articulation (21, 20 ; 21', 20') du bras oscillant (19 ; 19') sont disposés l'un par rapport à l'autre ainsi que par rapport à l'axe de basculement (5) et à l'axe de pivotement (18 ; 18') de telle façon que le premier point d'articulation (21 ; 21') lors d'un basculement vers le haut du bras oscillant (19 ; 19') déclenché par le basculement du plancher porteur (2) autour de son deuxième point d'articulation (20 ; 20') se déplace sur un arc de cercle autour du deuxième point d'articulation (20 ; 20'), l'arc de cercle dans la zone de la trajectoire du mouvement du premier point d'articulation (21 ; 21') entre sa position occupée en position initiale du plancher porteur (2) et sa position supérieure occupée en position extrême de basculement du plancher porteur (2) correspondant essentiellement à un cercle autour de l'axe de basculement (5) dont le rayon est déterminé par l'écartement entre l'axe de basculement (5) et le premier point d'articulation (21 ; 21') en position initiale du plancher porteur (2).

13. Elément de convoyeur basculant selon la revendication 12, **caractérisé en ce que** les points d'articulation (21, 20 ; 21', 20') du bras oscillant (19 ; 19'), l'axe de basculement (5) et l'axe de pivotement (18 ; 18') de chaque bras oscillant (19 ; 19') sont disposés l'un par rapport à l'autre de telle façon que le premier point d'articulation (21 ; 21') lors d'un basculement vers le bas du bras oscillant (19 ; 19') déclenché par le basculement du plancher porteur (2) autour de son deuxième point d'articulation (20 ; 20') se déplace sur un arc de cercle autour du deuxième point d'articulation (20 ; 20'), l'arc de cercle se trouvant dans la zone de la trajectoire du mouvement du premier point d'articulation (21 ; 21') à l'intérieur du cercle autour de l'axe de basculement (5) avec le rayon déterminé par l'écartement entre l'axe de basculement (5) et le premier point d'articulation (21 ; 21') en position initiale du plancher porteur (2).

14. Elément de convoyeur basculant selon la revendication 7, **caractérisé en ce que** l'emplacement du deuxième point d'articulation (20 ; 20') d'un limon (11 ; 11') ou, selon le cas, de son bras oscillant (19 ; 19') disposé dans un segment fixe (7 ; 7') de l'élément de convoyeur basculant (1) est déterminé par le point d'intersection de la médiatrice (M_{21/21o}) sur la ligne de jonction (21 - 21o) entre le premier point d'articulation dans sa position initiale (21) et dans sa position supérieure (21o) d'une part, et de la médiatrice (M_{21/21u}) sur la ligne de jonction (21 - 21u) entre le premier point d'articulation dans sa position initiale (21) et dans sa position inférieure (21u) d'autre part (fig. 7).
